(19) Europäisches Patentamt / European Patent Office / Office européen des brevets

(11) **EP 3 276 383 A1**

(12) **EUROPEAN PATENT APPLICATION**
published in accordance with Art. 153(4) EPC

(43) Date of publication:
**31.01.2018 Bulletin 2018/05**

(51) Int Cl.:
*G02B 5/22* (2006.01)       *B32B 7/02* (2006.01)
*B60J 1/00* (2006.01)       *G02B 5/30* (2006.01)
*G02B 27/01* (2006.01)

(21) Application number: **16768746.6**

(22) Date of filing: **22.03.2016**

(86) International application number:
**PCT/JP2016/058955**

(87) International publication number:
**WO 2016/152843 (29.09.2016 Gazette 2016/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.03.2015 JP 2015061201**

(71) Applicants:
• **Nippon Kayaku Kabushiki Kaisha**
  **Tokyo 100-0005 (JP)**
• **Polatechno Co., Ltd.**
  **Joetsu-shi, Niigata 944-0101 (JP)**

(72) Inventors:
• **TAKAHASHI Chihiro**
  **Tokyo 115-8588 (JP)**
• **TAKEICHI Yoshitaka**
  **Joetsu-shi**
  **Niigata 944-0101 (JP)**
• **YAMAMOTO Michiyuki**
  **Joetsu-shi**
  **Niigata 944-0101 (JP)**

(74) Representative: **Gille Hrabal**
  **Brucknerstrasse 20**
  **40593 Düsseldorf (DE)**

(54) **OPTICAL LAMINATE INCLUDING INFRARED SHIELDING LAYER AND POLARIZING FILM**

(57) [Problem] To provide an optical laminate used as a shielding film provided on or attached to a window or the like, specifically an optical laminate wherein shielding capability is greatly improved while inhibiting a lowering of transmittance for output light in an image light output window for image forming devices, such as LCDs, that are used in HUDs and the like and output an image by polarized light.

[Solution] An optical laminate has a layer having an infrared absorption capability laminated with a polarizing film.

FIG. 2

Natural light transmittance

EP 3 276 383 A1

**Description**

TECHNICAL FIELD

The present invention relates to an optical laminate used as a shielding film provided on or attached to a window, etc., and particularly relates to an optical laminate that is particularly suitably used for heat-shielding of an image-forming device with which polarized light is outputted, such as a liquid crystal display device (LCD), etc. used for a head-up display, etc., with which a driver can visually recognize the front field of vision and the instrument display at one time, without dropping their line of sight.

BACKGROUND ART

A need exists to impart windows of buildings, vehicles, or display cases for refrigerators or freezers with the ability to reflect or absorb heat rays (infrared rays) to reduce heat, suppress thermal degradation of articles inside, save energy, etc.

In particular, laminated glass configured of two facing sheets of plate-shaped glass and an interlayer film sandwiched therebetween is ordinarily used as a "windshield" on the front surface of an automobile, aircraft, etc., but recently concerns related to improving safety have drawn attention to head-up displays (HUD) that, e.g., display travel information of an automobile, such as speed, within the same field of vision as the windshield of the automobile.

Diverse modes of HUDs based on a variety of mechanisms have been developed. In an example of an HUD according to one mode, instead of the display unit being on the windshield surface, travel information, etc., transmitted from a control unit is reflected onto the windshield from a display unit on the instrument panel, thereby allowing visual recognition by the driver within their normal field of vision (specifically, within the same field of vision as the windshield), without the driver having to drop their line of sight. With HUDs of such a mode, image light is outputted to the windshield from an image-forming device such as an LCD, etc., but sunlight passing through the windshield is concentrated on the image-forming device; therefore, a problem has been presented in that members of the image-forming device such as the LCD elements increase in temperature, and tend to degrade under the heat. Heat shielding of the image-forming device has accordingly been sought.

There are a variety of materials having heat-shielding properties; Patent Reference 1 discloses a pressure-sensitive adhesive imparted with heat-shielding properties by dispersing infrared-absorbing microparticles in the pressure-sensitive adhesive, and a pressure-sensitive adhesive sheet obtained by applying the pressure-sensitive adhesive. The pressure-sensitive adhesive sheet has infrared absorption properties while maintaining transparency. Since the pressure-sensitive adhesive layer itself has shielding properties, process simplification is achieved in enabling shielding properties to be imparted via sheet lamination.

However, shielding from thermal energy in the visible light region has not been taken into consideration in heat-shielding transparent sheets of such description.

In the wavelength distribution of sunlight energy, the visible light region has higher energy than the infrared region; therefore, shielding of visible light has a significant effect in terms of improving shielding performance. However, to realize heat-shielding for the visible light region, it is necessary to lower the visible light transmittance, which has presented a problem in that transparency must be sacrificed.

To reduce the visible light transmittance, it is possible to use a color filter, a metal thin film, a dielectric multilayer film, or other member containing a material for absorbing or reflecting light, but it is also possible to reduce visible light transmittance by adjusting the lighting amount. Lighting amount devices of an automobile in which two polarizing plates are used are known as means for adjusting the lighting amount (see Patent Reference 2).

In such lighting devices, it is possible to adjust the amount of light that passes through the two polarizing plates by rotating the angle of the absorption axis of the second polarizing plate in relation to the absorption axis of the first polarizing plate. However, no thorough examinations have been carried out on how to set the transmission axis of the polarizing plates in relation to the output light wave surface when output light from a projector or other device that forms images by outputting polarized light is passed through the plates.

PRIOR ART REFERENCES

PATENT REFERENCES

Patent Reference 1: International Publication 2013/039039
Patent Reference 2: Japanese Laid-Open Patent Application 2008-094294

## SUMMARY OF THE INVENTION

## PROBLEMS TO BE SOLVED BY THE INVENTION

The purpose of the present invention is to provide an optical laminate used as a shielding film provided on or affixed to a window, etc., and in particular to an optical laminate in which the shielding performance is dramatically improved while any decrease in outputted-light transmittance is minimized in an image light output window of an LCD or other image-forming device used for HUDs, etc., in which an image is outputted with polarized light.

## MEANS USED TO SOLVE THE ABOVE-MENTIONED PROBLEMS

As the result of thoroughgoing studies, the inventors discovered that providing a polarizing film on an image light output window so that the output light wave surface of an LCD or other image-forming device that outputs polarized light and the transmission axis of the polarizing film are parallel makes it possible to transmit the majority of the output light from the image-forming device and shield the polarization components of natural light such as sunlight using the polarizing plate while maintaining the image brightness, and causes an excellent heat-shielding effect in the visible light region to be demonstrated. The inventors also discovered that laminating a heat-shielding, transparent, pressure-sensitive adhesive agent having infrared absorption properties on the polarizing film yielded a shielding effect on the infrared region as well as the visible light region, and perfected the present invention.

Specifically, the present invention relates to:

(1) An optical laminate comprising a layer having infrared absorption capability and a polarizing film, wherein the layer and the polarizing film are laminated;

(2) The optical laminate according to the abovementioned (1), wherein the layer having infrared absorption capability is formed from an infrared-absorbing pressure-sensitive adhesive composition;

(3) The optical laminate according to the abovementioned (2), wherein the infrared-absorbing pressure-sensitive adhesive composition contains:

(A) infrared-absorbing microparticles,
(B) an acrylic copolymer, and
(C) a dispersant.

(4) The optical laminate according to any of the abovementioned (1) to (3), wherein the infrared-absorbing microparticles are tin oxide, indium oxide, or zinc oxide;

(5) The optical laminate according to any of the abovementioned (1) to (4), wherein the polarizing film includes a first polarizing film and a second polarizing film, and
the polarizing film and the layer having the infrared absorption capability are laminated such that the layer having the infrared absorption capability is positioned between the first polarizing film and the second polarizing film;

(6) The optical laminate according to the abovementioned (5), wherein the polarizing film and the layer having the infrared absorption capability are laminated so that the absorption axis of the first polarizing film and the absorption axis of the second polarizing film are parallel;

(7) The optical laminate according to any of the abovementioned (1) to (6), wherein the polarizing film is a polarizing element sandwiched by supports;

(8) The optical laminate according to the abovementioned (7), wherein the polarizing element comprises a stretched polymer film containing a dichroic dye;

(9) The optical laminate according to the abovementioned (8), wherein the dichroic dye is an organic dye;

(10) The optical laminate according to any of the abovementioned (1) to (9), wherein parallel transmittance in relation to absolute polarization of 380 to 780 nm is 70% or greater, a solar radiation heat acquisition rate is 80% or less, a haze value is 8% or less, and a polarization degree is 30% or greater;

(11) The optical laminate according to any of the abovementioned (1) to (9), wherein transmittance in relation to visible light of 380 to 780 nm is 50% or greater, and solar radiation transmittance is 80% or less;

(12) An image-forming device comprising the optical laminate according to any of the abovementioned (1) to (10);

(13) The image-forming device according to the abovementioned (12), wherein the optical laminate is provided such that the transmission axis of the polarizing film is parallel to an output light wave surface of the image-forming device;

(14) A head-up display comprising the optical laminate according to any of the abovementioned (1) to (10) or the image-forming device according to the abovementioned (12) or (13) ;

(15) A window glass comprising the optical laminate according to any of the abovementioned (1) to (9) and (11); and

(16) A manufacturing method of an optical laminate, comprising a step of laminating a polarizing film and a layer having infrared absorption capability.

ADVANTAGES OF THE INVENTION

The optical laminate of the present invention is able to shield the polarization components of natural light such as sunlight with a polarizing film, and to allow infrared light to be shielded with a layer having infrared absorption capability, and accordingly has an exceptional heat-shielding effect in a broad wavelength region from the visible light to infrared region.

BRIEF DESCRIPTION OF THE DRAWINGS

FIG. 1 is a graph of the visible-range polarization transmittance (parallel transmittance Ky and orthogonal transmittance Kz) of optical laminates produced in Example 1 of the present invention and Comparative Example 1, as well as the natural light transmittance Ts of a laminate produced in the Comparative Example 2;
FIG. 2 is a graph of the natural light transmittance of 300 to 2500 nm of the optical laminate produced in Example 1 of the present invention and Comparative Examples 1 and 2;
FIG. 3 shows an example of an optical laminate including two polarizing films and one infrared shielding layer; and
FIG. 4 shows an example in which an optical laminate is provided on the image light output window so that the output light wave surface of the image-forming device that outputs polarized light and the transmission axis of the polarizing film are parallel.

BEST MODE FOR CARRYING OUT THE INVENTION

The optical laminate of the present invention includes one or more polarizing films and one or more layers having infrared absorption capability (hereafter also referred to as "infrared shielding layer").

(1) Polarizing film

Examples of polarizing films include iodine-based polarizing films, dye-based polarizing films, color polarizing films, polyvinylene polarizing films, infrared polarizing films, and ultraviolet polarizing films, but any polarizing film can be used without particular limitation in the present invention.
The polarizing film can be produced using a known method. Known methods include, for example, adsorbing a dichroic water-soluble dye or a dye of a potassium-iodine solution, etc., on a transparent polymer film made of, e.g., polyvinyl alcohol (and optionally treated with boric acid, etc.), stretching the film in a monoaxial direction followed by drying to obtain a polarizing element, and sandwiching the polarizing element with supports; e.g., a protective film made of a plastic film, with use of a suitable bonding agent (including pressure-sensitive adhesive agents). Here, the transparent polymer films are currently almost all polyvinyl alcohol films, and triacetyl cellulose film, cycloolefin polymer (COP) film, polycarbonate film, etc. are used as the protective film. It is suitable to use a polarizing film produced by, *inter alia,* a method for forming a polyene structure by dehydrating uniaxially stretched polyvinyl alcohol or dehydrochlorinating polyvinyl chloride, a method for uniaxially stretching a film formed by kneading a dichroic dye among disperse dyes in a resin such as polyester, or a method for rubbing the surface of a plastic film to impart orientation, or after applying a photo-functional compound such as an azobenzene polymer, irradiating the film with polarized light to impart orientation, applying a dichroic dye on top of the oriented film, and further providing an overcoat layer. Using an organic dye as the dichroic dye is especially preferred because not only will it be possible to obtain a polarizing film with the desired hue and transmittance using a method involving mixing one or more types of dyes, but it will be possible to maintain stable optical characteristics even in high-temperature, high-humidity environments.
Examples of water-soluble dyes having dichroism include C.I. Direct Yellow-12, C.I. Direct Yellow-86, C.I. Direct Yellow-87, C.I. Direct Yellow-142, C.I. Direct Orange 39, C.I. Direct Red 81, C.I. Direct Red 89, C.I. Direct Red 224, C.I. Direct Red 243, C.I. Direct Red 83, C.I. Direct Violet 9, C.I. Direct Violet 51, C.I. Direct Violet 66, C.I. Direct Blue 90, C.I. Direct Blue 200, C.I. Direct Blue 201, C.I. Direct Blue 202, C.I. Direct Blue 203, C.I. Direct Blue 237, and C.I. Direct Green 59. Examples of disperse dyes include those described in Japanese Laid-Open Patent Application S58-68008 and Japanese Laid-Open Patent Application S58-124621.
The optical characteristics of this polarizing film differ according to the desired shielding capability, the natural-light transmittance (lighting amount), or the output light transmittance of the image-forming device (image brightness); however, when the polarizing film is used for heat-shielding of the image-forming device, the parallel transmittance Ky thereof in relation to absolute polarization of 380 to 780 nm as calculated in accordance with JIS R3106 is preferably 70% or greater to ensure a certain degree of image brightness, with the image visibility being taken into consideration.

Also, the degree of polarization, which is one index indicating the polarization capability of the polarizing film, is calculated using Formula (1) below.

$$\{(H1 - H2)/(H1 + H2)\}/2 \quad \ldots \quad (1)$$

(in the formula, H1 is the transmittance when two of the same polarizing plates are arranged in parallel with the absorption axis, and H2 is the transmittance when two of the same polarization plates are arranged so that the absorption axes are orthogonal)

A higher polarization degree as calculated from the above formula corresponds to better polarization capability, the preferred polarization degree value being 30% or greater.

(2) Layer having infrared absorption capability

The layer having infrared absorption capability; i.e., the infrared shielding layer, is formed from an infrared absorbing pressure-sensitive adhesive composition.

The infrared-absorbing pressure-sensitive adhesive composition contains (A) infrared-ray-shielding microparticles, (B) an acrylic copolymer, and (C) a dispersant, which shall be described below.

(2-1) Infrared-ray-shielding microparticles (A)

Suitable infrared-ray-shielding microparticles do not absorb visible light, have excellent absorption from the near infrared part to the far infrared part, or have scattering characteristics. Examples of such infrared-ray-shielding microparticles include electroconductive metal oxides having a plasma wavelength in the near infrared region. Specific examples include tin oxide, indium oxide, zinc oxide, tungsten oxide, chrome oxide, molybdenum oxide, etc., amongst which tin oxide, indium oxide, and zinc oxide, which have no light absorption in the visible light range, are preferable.

To improve the electroconductivity of these oxides, doping with a third component is very desirable. The component used as a dopant in such instances are: Sb, V, Nb, Ta, etc., for tin oxide; Zn, Al, Sn, Sb, Ga, Ge, etc., for indium oxide; and Al, Ga, In, Sn, Sb, Nb, etc., for zinc oxide. Among these, tin-containing indium oxide (ITO), in which indium oxide is doped with Sn, can be preferably used.

The infrared-ray-shielding microparticles used in the present invention are obtained, for example, by adding primary particles measuring 1 to 100 nm in particle diameter into an organic solvent, and dispersing the primary particles by applying dispersion energy to the organic solvent. The primary particles can be obtained using vapor phase synthesis, liquid phase synthesis, or another known method without particular limitation provided that primary particles measuring 1 to 100 nm in diameter are obtained. For example, the method disclosed in Japanese Laid-Open Patent Application H6-227815 may be used as a method of producing indium oxide microparticles; i.e., heat-shielding microparticles are obtained by neutralizing an aqueous solution of a salt containing a specific microparticle element with alkali, filtering and washing the obtained precipitate, and performing a heat treatment at high temperature. Methods for producing tin oxide microparticles and zinc oxide microparticles are disclosed in Japanese Laid-Open Patent Application H2-105875 and Japanese Laid-Open Patent Application H6-234522, respectively. Commercially available products may be used as long as the particles have the diameter specified above. The particle diameter is calculated from the specific surface area as measured using the BET method.

A prior-art method can be used for dispersing the primary particles in the organic solvent. Specifically, the primary particles and the organic solvent are mixed at a designated ratio; a dispersant, surfactant, etc., is added as necessary; and the particles can be dispersed using a dispersing device such as a sand mill, attritor, ball mill, homogenizer, roll mill, etc.

(2-2) Acrylic copolymer (B)

Since the heat-shielding transparent, pressure-sensitive adhesive sheet coated with the heat-shielding, pressure-sensitive adhesive sheet is provided on or affixed to a window, etc., and is used to block the heat ray components of the wavelengths included in sunlight, weather resistant is a primary criterion. Therefore, it is preferable that the used resin be a pressure-sensitive adhesive resin with a highly weather-resistant acrylic copolymer as a constituent component. An acrylic copolymer can ordinarily be produced by copolymerizing a main monomer that yields a polymer having a low glass transition point when used as a homopolymer, and a comonomer that yields a polymer having a high glass transition point.

An acrylic acid alkyl ester with $C_{2-14}$ alkyl groups, or a methacrylic acid alkyl ester with $C_{4-16}$ alkyl groups, which

yield a polymer with a low glass transition point via polymerization, is used as the main monomer. A copolymerizable monomer that yields a polymer having a higher glass transition point via polymerization is used as the comomoner.

Examples of the acrylic acid alkyl ester that yields a polymer having a low glass transition point include ethyl acrylate, n-propyl acrylate, isopropyl acrylate, methoxy ethyl acrylate, n-butyl acrylate, isobutyl acrylate, secondary butyl acrylate, 2-ethyl hexyl acrylate, n-octyl acrylate, isooctyl acrylate, isononyl acrylate, isostearyl acrylate, etc.

Examples of the alkyl ester methacrylate that yields a polymer having a low glass transition point include 2-ethyl hexyl methacrylate, n-octyl methacrylate, n-lauryl methacrylate, etc.

Examples of the comonomer include vinyl acetate, acrylonitrile, acrylic amide, styrene, methyl methacrylate, methyl acrylate, etc.

In order to obtain the desired pressure-sensitive adhesive capability, it is also possible to use (meth)acrylic acid, itaconic acid, hydroxyethyl (meth)acrylate, hydroxypropyl (meth)acrylate, dimethyl amino ethyl (meth)acrylate, acrylic amide, methylol acrylic amide, dimethyl acrylic amide, glycidyl methacrylate, maleic anhydride, etc., as a functional-group-containing momoner, in addition to the main monomer and comonomer described above.

This kind of acrylic copolymer can be either a crosslinking type or a non-crosslinking type. For the crosslinking type, there are used a variety of crosslinking agents such as epoxy compounds, isocyanate compounds, metal chelate compounds, metal alkoxides, metal salts, amine compounds, hydrazine compounds, or aldehyde-based compounds, etc., or crosslinking can be achieved by radiation irradiation, the method of crosslinking being selected as appropriate according to the type of functional group, etc.

The degree of crosslinking of the acrylic copolymer differs according to the type of pressure-sensitive adhesive resin, the composition, and other criteria, but is not subjected to any particular limitation.

As described above, dispersing infrared-absorbing microparticles in an adhesive layer comprising an acrylic copolymer can impart heat-shielding properties to the layer having infrared absorption capability of the present invention, while maintaining the transparency of the infrared shielding layer. Also, since the pressure-sensitive adhesive layer itself has shielding properties, lamination processing of the sheet allows a shielding property to be imparted, which simplifies processing. It is accordingly possible to facilitate lamination by affixing the layer having infrared absorption capability to the polarizing film, and the optical laminate of the present invention is exceptional in terms of manufacturing efficiency and manufacturing cost.

(2-3) Dispersant (C)

Representative examples of dispersants include: low-molecular weight anionic compounds such as fatty acid salts (soap), $\alpha$-sulfo fatty acid ester salts (MES), alkylbenzene sulfonates (ABS), linear alkylbenzene sulfonates (LAS), alkyl sulfates (AS), alkyl ether sulfates (AES), and triethanol alkyl sulfates; low-molecular weight nonionic compounds such as fatty acid ethanol amides, polyoxyethylene alkyl ethers (AE), polyoxyethylene alkyl phenyl ethers (APE), sorbitol, and sorbitan; low-molecular weight cationic compounds such as alkyl trimethyl ammonium salts, dialkyl dimethyl ammonium chlorides, and alkyl pyridinium chlorides; low-molecular weight amphoteric compounds such as alkyl carboxyl betaine, sulfobetaine, and lecithin; high-molecular weight aqueous dispersants represented by naphthalene sulfonate formalin condensates, polystyrene sulfonates, polyacrylates, salts of copolymers of vinyl compounds and carboxylic acid-based monomers, carboxymethyl cellulose, polyvinyl alcohols,, etc.; high-molecular weight nonaqueous dispersants such as partial alkyl-esters of polyacrylic acid and polyalkylene polyamines; and high-molecular weight cationic dispersants such as polyethyleneimine and aminoalkyl methacrylate copolymers, However, any dispersant having a structure other than those exemplified above is not excluded, provided that such a dispersant is suitably applied to the particles of the present invention. Specific names of known dispersants are listed below: FLOWLEN DOPA-15B and FLOWLEN DOPA-17 (products of KYOEISHA CHEMICAL Co., Ltd.); Solplus AX5, Solplus TX5, Solsperse 9000, Solsperse 12000, Solsperse 17000, Solsperse20000, Solsperse21000, Solsperse24000, Solsperse26000, Solsperse27000, Solsperse28000, Solsperse32000, Solsperse35100, Solsperse 54000, and Solthix 250 (Lubrizol); EFKA4008, EFKA4009, EFKA4010, EFKA4015, EFKA4046, EFKA4047, EFKA4060, EFKA4080, EFKA7462, EFKA4020, EFKA4050, EFKA4055, EFKA4400, EFKA4401, EFKA4402, EFKA4403, EFKA4300, EFKA4320, EFKA4330, EFKA4340, EFKA6220, EFKA6225, EFKA6700, EFKA6780, EFKA6782, and EFKA8503 (products of EFKA Additives B.V.); AJISPER PA111, AJISPER PB711, AJISPER PB821, AJISPER PB822, AJISPER PN411, and FAMEX L-12 (Ajinomoto Fine-Techno); TEXAPHOR-UV21 and TEXAPHOR-UV61 (products of Cognis Japan); DisperBYK101, DisperBYK102, DisperBYK106, DisperBYK108, DisperBYK111, DisperBYK116, DisperBYK130, DisperBYK140, DisperBYK142, DisperBYK145, DisperBYK161, DisperBYK162, DisperBYK163, DisperBYK164, DisperBYK166, DisperBYK167, DisperBYK168, DisperBYK170, DisperBYK171, DisperBYK174, DisperBYK180, DisperBYK182, DisperBYK192, DisperBYK193, DisperBYK2000, DisperBYK2001, DisperBYK2020, DisperBYK2025, DisperBYK2050, DisperBYK2070, DisperBYK2155, DisperBYK2164, BYK220S, BYK300, BYK306, BYK320, BYK322, BYK325, BYK330, BYK340, BYK350, BYK377, BYK378, BYK380N, BYK410, BYK425, and BYK430 (products of BYK Japan KK); DISPARLON 1751N, DISPARLON 1831, DISPARLON 1850, DISPARLON 1860, DISPARLON 1934, DISPARLON DA-400N, DISPARLON DA-703-50, DISPARLON DA-725, DISPARLON DA-705 DISPARLON DA-7301, DISPARLON DN-900, DISPARLON NS-5210, DISPARLON NVI-8514L, HIPLAAD ED-152, HIPLAAD ED-216, HIPLAAD ED-251, and HIPLAAD ED-360 (Kusumoto Chemicals, Ltd.); FTX-207S, FTX-212P, FTX-220P, FTX-220S, FTX-228P, FTX-710LL, FTX-750LL, FTERGENT 212P, FTERGENT 220P, FTERGENT 222F, FTERGENT 228P, FTERGENT 245F, FTERGENT 245P, FTERGENT 250, FTERGENT 251, FTERGENT 710FM, FTERGENT 730FM, FTERGENT 730LL, FTERGENT 730LS, FTERGENT 750DM, and FTERGENT 750FM (NEOS); AS-1100, AS-1800, and AS-2000 (TOAGOSEI), KAOCER 2000, KAOCER 2100, KDH-154, MX-2045L, HOMOGENOL L-18, HOMOGENOL L-95, RHEODOL SP-010V, RHEODOL SP-030V, RHEODOL SP-L10, and RHEODOL SP-P10 (Kao); EPAN U103, SHALLOL DC902B, NOIGEN EA-167, PLYSURF A219B, and PLYSURF AL (DAI-ICHI KOGYO SEIYAKU); MEGAFAC F-477, MEGAFAC 480SF, and MEGAFAC F-482 (DIC); SILFACE SAG503A and DYNOL 604 (Nissin Chemical); SN SPERSE 2180, SN SPERSE 2190, and SN LEVELER S-906 (SAN NOPCO); and S-386 and S-420 (AGC SEIMI CHEMICAL).

The infrared-absorbing pressure-sensitive adhesive composition of the present invention can further contain a plasticizer as necessary. Examples of plasticizers include esters such as phthalic acid esters, trimellitic acid esters, pyromellitic acid esters, adipic acid esters, sebacic acid esters, phosphoric acid triesters, or glycol ester, etc., process oil, liquid polyether, liquid polyterpene, and other liquid resins, etc. These plasticizers can be used singly or in combination. Such plasticizers preferably have good compatibility with the pressure-sensitive adhesive agent.

In addition to the plasticizer, the infrared-absorbing pressure-sensitive adhesive composition can further contain, as necessary, various additives such as ultraviolet absorbers, antioxidants, and photostabilizers.

Furthermore, the infrared-absorbing pressure-sensitive adhesive composition of the present invention can be an organic solvent type, an emulsion type, or a solventless type.

Examples of the organic solvent include toluene, xylene, methanol, ethanol, isobutanol, n-butanol, acetone, methyl ethyl ketone, ethyl acetate, and tetrahydrofuran. These may be used singly or in combination.

For reasons relating to convenience in application, the coating liquid of the infrared-absorbing pressure-sensitive adhesive composition is preferably adjusted using the organic solvent noted above so that the solids concentration is in a range of 10 to 50 mass%.

The ratio in which the heat-shielding property microparticles are dispersed in the adhesive resin is determined according to the desired thickness to be applied and the shielding capability of the pressure-sensitive adhesive layer. In terms of the optical performance of a film coated with the infrared-absorbing pressure-sensitive adhesive agent, ideally the visible light transmittance will be high and the solar radiation transmittance will be low, but typically these are in an inversely proportional relationship, the optical performance being determined according to which performance is emphasized.

When a film coated with the infrared-absorbing pressure-sensitive adhesive composition was actually affixed to the window glass of a building or automobile, and the effects of summer and winter were measured, it was found that the solar radiation transmittance calculated according to JIS R3106 should be 80% or less to sufficiently obtain a summer temperature reduction effect, and the 380 to 780 nm visible light transmittance when calculated according to JIS R3106 should be 50% or greater to minimize any rise in illumination costs and winter heating costs. Therefore, for the optical characteristics of a film coated with a heat-shielding pressure-sensitive adhesive agent composition, the visible light transmittance is preferably 50% or greater and the solar radiation transmittance is preferably 80% or less.

The infrared-absorbing pressure-sensitive adhesive layer can be formed by directly applying the infrared-absorbing pressure-sensitive adhesive composition on one or both surfaces of the polarizing film, and can also be formed by applying the infrared-absorbing pressure-sensitive adhesive composition on the peeling treated surface of a peeling sheet that underwent peeling treatment, and by bonding this sheet to one surface or both surfaces of the polarizing film.

With the present invention, there is no particular limitation as to the method of applying the infrared-absorbing pressure-sensitive adhesive composition; the composition can be applied using a comma coater, bar coater, spin coater, spray coater, roll coater, gravure coater, knife coater, or a variety of other types of coating devices.

In general, a thickness of 10 to 50 $\mu$m is normally adopted for the coating thickness of the pressure-sensitive adhesive layer in consideration of the ability to conform to the bonded surface as well as the pressure-sensitive adhesive force and matters related to cost, but the ratio of the infrared-absorbing microparticles (A) that give the heat-shielding properties in this thickness range to the resin solids content, which is the sum of the acrylic copolymer (B), and the dispersant (C) (i.e., (A):((B) + (C))) is preferably in the range of 3:97 to 1:1 (weight ratio). When the proportion of the infrared-absorbing microparticles (A) falls below the range noted above, the film thickness will need to be 50 $\mu$m or greater to obtain the necessary heat-shielding property, whereas when the proportion of the infrared-absorbing microparticles (A) is greater than the range noted above, the visible light transmittance becomes too low.

Furthermore, the haze value of the film needs to be 8% or less so that the transparency of the window is not compromised, and is preferably 3% or less.

There is no particular limit for the layer structure of the optical laminate of the present invention, as long as the structure contains at least one polarizing film and one layer having infrared absorption capability.

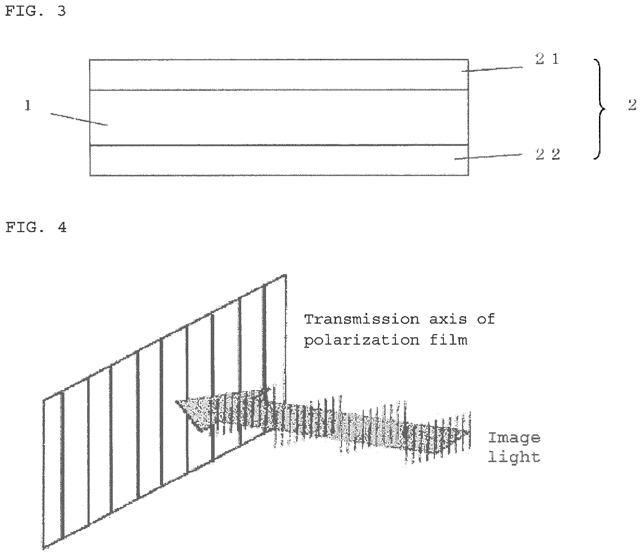

For example, when the optical laminate including one polarizing film and one layer having infrared absorption capability is used for an image-forming device equipped in an HUD, the optical laminate is preferably installed so that the transmission axis of the polarizing film and the output light wave surface of the image-forming device are parallel, as shown in FIG. 4. In this case, the more that the transmission axis of the polarizing film and the output light wave surface of the image-forming device of the polarized light output become orthogonal instead of parallel, the more the output light transmittance of the image-forming device decreases, which presents a risk in terms of diminished image brightness.

Also, with such an image-forming device, it is also possible to include on the optical laminate two or more polarizing films and one layer having infrared absorption capability. For example, when the optical laminate contains two polarizing films and one layer having infrared absorption capability, as shown in FIG. 3, lamination is performed so that the layer 1 having infrared absorption capability is positioned between the two polarizing films, specifically, between the first polarizing film 21 and the second polarizing film 22. The lamination is performed so that the absorption axis of the first polarizing film 21 and the absorption axis of the second polarizing film 22 are parallel to each other. Furthermore, as shown in FIG. 4, it is preferable that the optical laminate be installed on the image light output window so that the output light wave surface of the image-forming device and the transmission axes of the first and second polarizing films 21 and 22 are parallel. By providing the laminate on the image light output window so that the output light wave surface of the image-forming device that outputs the polarized light such as an LCD, etc. and the transmission axes of the polarizing plates are parallel, almost all the output light of the image-forming device is transmitted, and it is possible to dramatically improve the shielding effect of the image-forming device while keeping any adverse effect on the optical performance of the image-forming device to a minimum but maintaining image brightness. In this case as well, the more that the transmission axis of either polarizing film and the output light wave surface of the image-forming device approach orthogonal from parallel, the more the output light transmittance of the image-forming device decreases, which presents a risk that the image brightness will decline.

On the other hand, when provided on the window of a building or the window of a vehicle (automobile, aircraft, etc.), and used to adjust the internal lighting amount, it is possible to laminate two or more polarizing films and the layer having infrared absorption capability, and adjust the angle of the absorption axis of each polarizing film to match the desired lighting amount. The more that the angle formed by the absorption axis of one of the polarizing films and the absorption axis of one or more of the other polarizing films approaches orthogonal from parallel, the more it is possible to reduce the internal lighting amount, and to suppress glare.

In the optical laminate of the present invention, it is possible to further laminate a variety of films such as PET films, acrylic sheets, COP (cycloolefin polymer) films, polycarbonate films using various pressure-sensitive adhesive agents, bonding agents, etc. Moreover, it is possible to add desired functions to the laminate surface using a surface treatment such as hard coating, anti-glare processing, antireflection processing, etc.

The optical characteristics of the optical laminate of the present invention differ according to the desired shielding capability, or the brightness of the image or the output light transmittance of the image-forming device. However, when the optical laminate is used for heat-shielding of the image-forming device, the parallel transmittance Ky in relation to the 380 to 780 nm absolute polarization of the laminate as calculated according to JIS R3106 is preferably 70% or greater, and the parallel transmittance Ky in relation to absolute polarization is more preferably 80% or greater in order to ensure brightness of the image to some degree while taking image visibility into consideration. Also, the solar radiation heat acquisition rate calculated according to JIS R3106 is preferably 80% or less, more preferably 70% or less, and even more preferably 60% or less. Also, the optical laminate preferably has a haze of 8% or less and a polarization degree of 30% or greater.

The second aspect of the present invention relates to an image-forming device equipped with the optical laminate. There are no particular limitations as to the image-forming device, provided that the device is, e.g., an LCD or other image-forming device in which images are outputted using polarized light.

With an image-forming device of such description, as described above, the optical laminate is installed so that the transmission axis of the polarizing film is parallel to the output light wave surface of the image-forming device. Also, when two polarizing films are included in the optical laminate, the optical laminate is installed on the image light output window so that the transmission axis of the first polarizing film and the transmission axis of the second polarizing film are parallel to the output light wave surface of the image forming device.

The third aspect of the present invention relates to a head-up display (HUD) equipped with the optical laminate or the image-forming device.

There are no particularly limitations to the HUD; examples include HUDs in which the display unit is not on the windshield surface, but is one in which speed information, etc., sent from the control unit is visually recognized within the normal visual field of the driver (specifically, within the same field of vision as the windshield) by being reflected from the instrument panel display unit onto the windshield. Examples

The present invention is described in detail below using examples, but is not limited in any way by these examples.

Manufacturing Example 1 (tin-containing indium oxide (ITO) micropowder)

5.9 g of stannic chloride ($SnCl_4 \cdot 5H_2O$) and 75.9 g of indium chloride ($InCl_3$) were dissolved in 4000 mL of water, 2% aqueous ammonia was added to this combination over 58 minutes, and the pH was ultimately brought to 7.85, whereby a hydrate of tin oxide and indium oxide was coprecipitated. During this time, the solution temperature was maintained at 5°C. The coprecipitate was subsequently washed and then dried, before being baked at 900°C for two hours to obtain a tin-containing indium oxide (ITO) micropowder (primary particles). The resulting fine powder was measured using the BET method, which showed the specific surface area to be 35.3 $m^2$/g, and the particle diameter to be 25.6 nm.

Manufacturing Example 2 (toluene dispersion of tin-containing indium oxide (ITO))

1.12 g of the ITO micropowder obtained in Manufacturing Example 1, 0.7 g of acetyl acetone, and 0.175 g of the dispersant DisperBYK 140 (BYK Japan KK) were added to 7 mL of toluene, and the combination was charged into a pulverizing vessel of a batch type bead mill (T.K. Filmics model 30-25 model; Primix). Zirconia beads measuring 30 $\mu$m in average particle diameter were used for the crushing beads, and the pulverizing vessel volume was filled to 35% of capacity. Crushing was performed with the motor set to a circumferential speed of 6.8 m/s, and a crushing time of 10 minutes. The dispersion thus obtained was dried at 120°C in a dry oven, and pulverized in a mortar, whereupon the XRD pattern was measured (XPERT-PROMPD; Spectris), showing the half width of the primary main peak to be 0.441.

The obtained dispersion was subjected to centrifuging for 15 minutes at a speed of 5000 rpm using a centrifuge (Himac CR18; Hitachi Koki).

Manufacturing Example 3 (acrylic pressure-sensitive adhesive agent A)

291 g of n-butyl acrylate and 9 g of acrylic acid were dissolved in 366 g of toluene, and 0.15 g of azobis isobutyronitrile was introduced thereto. The resulting solution was polymerized for 6 hours at 70°C in a nitrogen stream, and an acrylic resin copolymer (weight-average molecular weight: Mw = 320,000) was obtained. The copolymer was further diluted with toluene to obtain an acrylic copolymer solution having a solid content 29.36% and a viscosity of 2700 Pas (acrylic pressure-sensitive adhesive A).

Example 1

A pressure-sensitive adhesive composition was obtained by mixing 100 parts by weight of the acrylic pressure-sensitive adhesive agent A produced in Manufacturing Example 3, 75.2 parts by weight of toluene dispersion of the tin-containing indium oxide (ITO) produced in Manufacturing Example 2, and 44.5 parts by weight of toluene, and dissolving the mixture until uniform. The composition was coated on one surface of a polyvinyl alcohol type polarizing film SHC-10U (Polatechno) using a comma coater so that the post-drying film thickness was 20 $\mu$m. The film was then dried, and one more polyvinyl alcohol type polarizing film SHC-10U (Polatechno) was affixed to the adhesive layer during winding to obtain the optical laminate of the present invention.

Comparative Example 1

Acrylic pressure-sensitive adhesive agent SK-Dyne 906 (acrylic adhesive agent; Soken Chemical and Engineering) was coated on one surface of a polyvinyl alcohol type polarizing film SHC-10U (Polatechno) using a comma coater to a post-drying film thickness of 20 $\mu$m. After drying, another sheet of polyvinyl alcohol type polarizing film SHC-10U (Polatechno) was affixed to the pressure-sensitive adhesive layer during winding, and a laminate was obtained.

Comparative Example 2

A pressure-sensitive adhesive layer was formed on one surface of an easy-adhering polyester film measuring 50 $\mu$m in thickness (A-4300; Toyobo) using the same operation as Example 1, but without using a polarizing film. Another sheet of easy-adhering polyester film measuring 50 $\mu$m in thickness (A-4300; Toyobo) was affixed to the adhesive layer during winding, and a laminate was obtained.

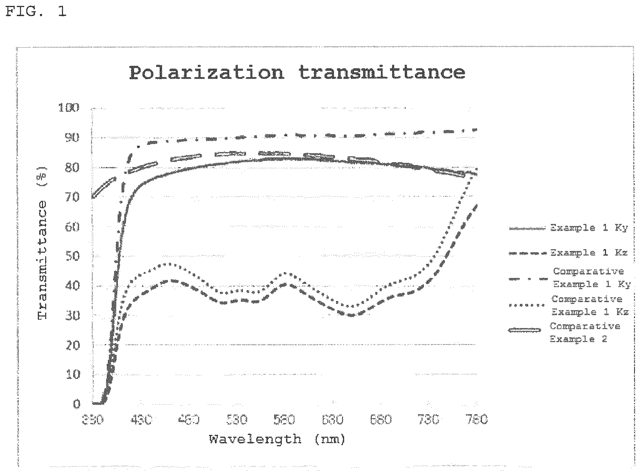

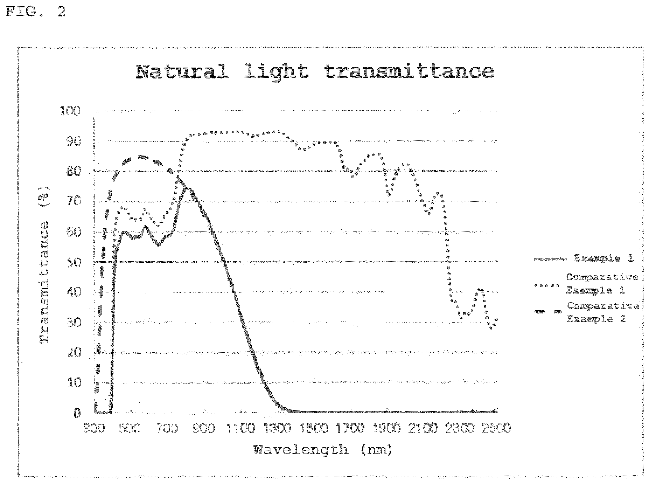

FIG. 1 shows the transmittance in relation to the absolute polarization for the visible range of the laminate produced in Example 1 and Comparative Example 1 (parallel transmittance Ky and orthogonal transmittance Kz) as well as the natural light transmittance Ts of the laminate produced in Comparative Example 2. FIG. 2 shows the 300 to 2500 nm natural light transmittance of the laminate produced in Example 1 and Comparative Examples 1 and 2.

Table 1 shows the values of the visible range transmittance (Ky, Kz) and the solar radiation heat acquisition (Tts) calculated according to JIS R3106 using the parallel transmittance Ky and orthogonal transmittance Kz in relation to the absolute polarization of the laminate produced in Example 1 and Comparative Examples 1 and 2 as well as the natural light transmittance Ts.

The transmittance was measured as described hereafter using a spectrophotometer (U-4100; Hitachi High Technologies) for the 300 to 2500 nm range.

When the transmittance was measured, a Glan-Taylor polarizer made by Hitachi High Technologies was provided on the light output side, and absolute polarization light was allowed to impinge on the measurement sample. The protective layer of the iodine based polarizing plate at that time was triacetyl cellulose with no ultraviolet ray absorption capability.

The absolute polarization light impinged on the laminate, and the measurement was performed. Ky was the parallel transmittance with regard to the absolute polarization light for each wavelength obtained by performing measurements such that the vibration direction of the absolute polarization light and the absorption axis direction of the polarizing film were orthogonal (the absorption axis of the absolute polarizer and the absorption axis of the polarizing plate of the present invention were parallel), and Kz was the orthogonal transmittance with regard to the absolute polarization light of each wavelength obtained by performing measurements such that the vibration direction of the absolute polarization light and the absorption axis direction of the polarizing plate of the present invention were parallel (the absorption axis of the absolute polarizer and the absorption axis of the polarizing plate of the present invention were orthogonal).

Based on the Ky and Kz values for each wavelength, the natural light transmittance Ts for each wavelength was calculated according to formula (J), and the polarization degree p at 550 nm was calculated according to formula (L).

$$\text{Single transmittance Ts} = (Ky + Kz)/2 \qquad \ldots \text{(J)}$$

$$\text{Polarization degree } \rho = (Ky - Kz)/(Ky + Kz) \quad \ldots \text{(L)}$$

[Table 1]

Table 1 Visible Range Transmittance with Regard to Absolute Polarization Light and Solar Radiation Heat Acquisition

| | Visible Range Transmittance | | Solar Radiation Heat Acquisition Rate Tts (%) | Degree of Polarization ρ |
|---|---|---|---|---|
| | Parallel transmittance Ky (%) | Orthogonal transmittance Kz (%) | | |
| Example 1 | 82.1 | 36.3 | 59.5 | 40.8 |
| Comparative Example 1 | 90.3 | 39.8 | 78.5 | 41.1 |
| Comparative Example 2 | 84.3 (natural light) | | 70.4 | - |

Based on FIGS. 1 and 2 and Table 1, in the laminate of Example 1, high parallel transmittance was exhibited for the visible light region, absorption of natural light occurred for both the visible light region and the infrared region, and the solar radiation heat acquisition rate is low. Therefore, by installing the laminate on the image light output window so that the output light wave surface of an LCD or other image-forming device of polarized light output, and the transmission axis of the polarizing plate, are parallel, almost all the output light of the image-forming device is transmitted, so that the presence of a high shielding capability was demonstrated while image brightness was maintained.

However, with the laminate of Example 1, since the orthogonal transmittance Kz is low, it is evident that the image brightness decreases the closer that the angle formed by the output light wave surface of the LCD or other image-forming device of polarized light output and the transmission axis of the polarizing plate becomes orthogonal.

Conversely, with Comparative Example 1, which does not have an infrared shielding layer formed from an infrared-absorbing pressure-sensitive adhesive composition, there is no natural light absorption in the infrared region, so the solar radiation heat acquisition rate is high, and shielding capability is poor. With Comparative Example 2, which does not have a polarizing film, there is no absorption of natural light in the visible light region; therefore, the solar radiation heat acquisition was high and the shielding capability was poor.

Key to symbols

1   Infrared shielding layer
2   Polarizing film
21   First polarizing film
22   Second polarizing film

**Claims**

1.  An optical laminate comprising a layer having infrared absorption capability and a polarizing film, wherein the layer and the polarizing film are laminated.

2.  The optical laminate according to Claim 1, wherein the layer having infrared absorption capability is formed from an infrared-absorbing pressure-sensitive adhesive composition.

3.  The optical laminate according to Claim 2, wherein the infrared-absorbing pressure-sensitive adhesive composition contains:

    (A) infrared-absorbing microparticles;
    (B) an acrylic copolymer; and
    (C) a dispersant.

4.  The optical laminate according to any of Claims 1 to 3, wherein the infrared-absorbing microparticles are tin oxide, indium oxide, or zinc oxide.

5.  The optical laminate according to any of Claims 1 to 4, wherein the polarizing film includes a first polarizing film and a second polarizing film, and
    the polarizing film and the layer having the infrared absorption capability are laminated such that the layer having the infrared absorption capability is positioned between the first polarizing film and the second polarizing film.

6.  The optical laminate according to Claim 5, wherein the polarizing film and the layer having the infrared absorption capability are laminated so that the absorption axis of the first polarizing film and the absorption axis of the second polarizing film are parallel.

7.  The optical laminate according to any of Claims 1 to 6, wherein the polarizing film is a polarizing element sandwiched by supports.

8.  The optical laminate according to Claim 7, wherein the polarizing element comprises a stretched polymer film containing a dichroic dye.

9.  The optical laminate according to Claim 8, wherein the dichroic dye is an organic dye.

10. The optical laminate according to any of Claims 1 to 9, wherein parallel transmittance in relation to absolute polarization of 380 to 780 nm is 70% or greater, a solar radiation heat acquisition rate is 80% or less, a haze value is 8% or less, and a polarization degree is 30% or greater.

11. The optical laminate according to any of Claims 1 to 9, wherein transmittance in relation to visible light of 380 to 780 nm is 50% or greater, and solar radiation transmittance is 80% or less.

12. An image-forming device comprising the optical laminate according to any of Claims 1 to 10.

13. The image-forming device according to Claim 12, wherein the optical laminate is provided such that the transmission axis of the polarizing film is parallel to an output light wave surface of the image-forming device.

**14.** A head-up display comprising the optical laminate according to any of Claims 1 to 10 or the image-forming device according to Claim 12 or 13.

**15.** A window glass comprising the optical laminate according to any of Claims 1 to 9 and 11.

**16.** A manufacturing method of an optical laminate, comprising a step of laminating a polarizing film and a layer having infrared absorption capability.

FIG. 1

Polarization transmittance

FIG. 2

Natural light transmittance

(X-axis: Wavelength (nm); Y-axis: Transmittance (%))

Legend: Example 1, Comparative Example 1, Comparative Example 2

FIG. 3

FIG. 4

Transmission axis of
polarization film

Image
light

## INTERNATIONAL SEARCH REPORT

| International application No. |
|---|
| PCT/JP2016/058955 |

A. CLASSIFICATION OF SUBJECT MATTER
*G02B5/22*(2006.01)i, *B32B7/02*(2006.01)i, *B60J1/00*(2006.01)i, *G02B5/30*(2006.01)i, *G02B27/01*(2006.01)i

According to International Patent Classification (IPC) or to both national classification and IPC

B. FIELDS SEARCHED

Minimum documentation searched (classification system followed by classification symbols)
G02B5/22, B32B7/02, B60J1/00, G02B5/30, G02B27/01

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2008-64842 A (Sumitomo Chemical Co., Ltd.),<br>21 March 2008 (21.03.2008),<br>paragraphs [0001], [0009] to [0052]<br>(Family: none) | 1-2,7-9,<br>12-13,16<br>3-4,14 |
| X<br>Y | JP 2006-208470 A (Seiko Epson Corp.),<br>10 August 2006 (10.08.2006),<br>paragraphs [0017] to [0036], [0052]; all<br>drawings<br>(Family: none) | 1,4-5,16<br>2-3 |

[X] Further documents are listed in the continuation of Box C.　　　　[ ] See patent family annex.

| | |
|---|---|
| *　　Special categories of cited documents:<br>"A"　document defining the general state of the art which is not considered　to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| 13 June 2016 (13.06.16) | 28 June 2016 (28.06.16) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**INTERNATIONAL SEARCH REPORT**

International application No.

PCT/JP2016/058955

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2008-304499 A (Sony Corp.),<br>18 December 2008 (18.12.2008),<br>claims 2 to 5; paragraphs [0031] to [0050]; fig. 1<br>& US 2008/0303996 A1<br>claims 2 to 5; paragraphs [0041] to [0060]; fig. 1<br>& CN 101320108 A & KR 10-2008-0107274 A<br>& TW 200909949 A | 1,5,12-13,16<br>14 |
| X | JP 7-72332 A (Mitsui Toatsu Chemicals, Inc.),<br>17 March 1995 (17.03.1995),<br>paragraphs [0001], [0002], [0022] to [0045]<br>(Family: none) | 1,7-11,15-16 |
| X<br><br>Y | WO 2013/097919 A1 (MERCK PATENT GMBH),<br>04 July 2013 (04.07.2013),<br>claims 1 to 15; page 20, line 5 to page 27, line 26; fig. 2<br>& JP 2015-509206 A<br>claims 1 to 15; paragraphs [0082] to [0107]; fig. 2<br>& US 2014/0333985 A1<br>claims 1 to 15; paragraphs [0094] to [0132]; fig. 2<br>& EP 2798397 A & CN 104011584 A<br>& KR 10-2014-0105611 A & TW 201335339 A | 1,5-6,10-11,<br>15-16<br>2-4,7-9,<br>12-14 |
| X<br>Y | JP 2011-203733 A (Samsung Corning Precision<br>Materials Co., Ltd.),<br>13 October 2011 (13.10.2011),<br>claim 7; paragraphs [0001] to [0004], [0021] to [0029]; all drawings<br>& US 2011/0234945 A1<br>claim 7; paragraphs [0005] to [0007], [0032] to [0040]; all drawings<br>& EP 2372409 A1 & KR 10-2011-0107546 A<br>& CN 102200606 A | 1-2,12-13,16<br>3-4,6,10-11 |
| Y | JP 2014-224921 A (Nippon Kayaku Co., Ltd.),<br>04 December 2014 (04.12.2014),<br>paragraphs [0093] to [0109]<br>& US 2016/0082697 A<br>paragraphs [0148] to [0153]; table 1<br>& WO 2014/185518 A1 & EP 2998769 A<br>& TW 201502601 A & AU 2014266268 A<br>& CN 105324689 A & KR 10-2016-0011197 A | 10-11 |
| Y | JP 2014-123076 A (Japan Display Inc.),<br>03 July 2014 (03.07.2014),<br>entire text; all drawings<br>& US 2014/0177040 A1<br>entire text; all drawings | 12-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013039039 A
- JP 2008094294 A
- JP S5868008 B
- JP S58124621 B

- JP H6227815 B
- JP H2105875 B
- JP H6234522 B